(19) Europäisches Patentamt / European Patent Office / Office européen des brevets

(11) **EP 3 732 452 B1**

(12) **EUROPÄISCHE PATENTSCHRIFT**

(45) Veröffentlichungstag und Bekanntmachung des Hinweises auf die Patenterteilung:
**10.05.2023 Patentblatt 2023/19**

(21) Anmeldenummer: **18826058.2**

(22) Anmeldetag: **21.12.2018**

(51) Internationale Patentklassifikation (IPC):
**G01L 1/22** *(2006.01)* **G01B 5/00** *(2006.01)*
**G01B 7/16** *(2006.01)*

(52) Gemeinsame Patentklassifikation (CPC):
**G01L 1/2268**

(86) Internationale Anmeldenummer:
**PCT/EP2018/086559**

(87) Internationale Veröffentlichungsnummer:
**WO 2019/129701 (04.07.2019 Gazette 2019/27)**

(54) **DEHNUNGSMESSSTREIFEN UMFASSEND EIN FLEXIBLES SUBSTRAT SOWIE EINE WIDERSTANDSSCHICHT UND SENSORELEMENT UMFASSEND EINEN DEHNUNGSMESSSTREIFEN**

STRAIN GAUGE COMPRISING A FLEXIBLE SUBSTRATE AND A RESISTANCE LAYER, AND SENSOR ELEMENT COMPRISING A STRAIN GAUGE

JAUGE EXTENSOMÉTRIQUE COMPRENANT UN SUBSTRAT FLEXIBLE ET UNE COUCHE RÉSISTIVE ET UN ÉLÉMENT CAPTEUR COMPRENANT UNE JAUGE EXTENSOMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.12.2017 DE 102017223831**

(43) Veröffentlichungstag der Anmeldung:
**04.11.2020 Patentblatt 2020/45**

(73) Patentinhaber: **Hochschule für Technik und Wirtschaft des Saarlandes
66117 Saarbrücken (DE)**

(72) Erfinder:
• **Langosch, Matthäus**
  **66352 Grossroseln (DE)**
• **Vollberg, Dennis**
  **66386 St. Ingbert-Oberwürzbach (DE)**

(74) Vertreter: **Hörschler, Wolfram Johannes et al
Patentanwälte Isenbruck Bösl Hörschler PartG mbB
Eastsite One
Seckenheimer Landstrasse 4
68163 Mannheim (DE)**

(56) Entgegenhaltungen:
DE-A1- 19 826 411    DE-C2- 19 826 411
US-A- 4 939 496      US-A- 5 508 676

**EP 3 732 452 B1**

**Beschreibung**

Die Erfindung betrifft einen Dehnungsmessstreifen umfassend ein flexibles Substrat sowie eine auf dem flexiblen Substrat angeordnete Widerstandsschicht. Weitere Aspekte der Erfindung betreffen Sensorelemente umfassend mindestens einen solchen Dehnungsmessstreifen.

Dehnungsmessstreifen werden beispielsweise als Bestandteil von Sensoren zur Erfassung mechanischer Messgrößen wie z.B. Drucksensoren oder Kraftsensoren eingesetzt. Derartige Sensoren umfassen ein elastisches Element wie einen Kraftaufnehmer oder eine Membran, wobei sich das elastische Element unter Einwirkung der zu messenden Größe verformt. Der Dehnungsmessstreifen ist dabei mit dem elastischen Element derart verbunden, dass eine Verformung des elastischen Elements auf den Dehnungsmessstreifen übertragen wird. Die Verformung des Dehnungsmessstreifens kann elektrisch erfasst werden.

Ein Dehnungsmessstreifen umfasst ein flexibles Substrat als Träger, auf dem mindestens ein Messwiderstand angeordnet ist. Der elektrische Widerstand des Messwiderstands ändert sich bei Verformung, so dass eine Verformung des Dehnungsmessstreifens über eine Änderung des elektrischen Widerstands messbar ist. Üblicherweise sind die Messwiderstände als Schichtwiderstände ausgeführt. Das flexible Substrat wird dazu mit einem Widerstandsmaterial beschichtet und der Messwiderstand wird durch Strukturieren des Widerstandsmaterials ausgebildet.

Die Stärke der Veränderung des elektrischen Widerstands bei Verformung des Dehnungsmessstreifens und damit bei Verformung des Messwiderstands ist abhängig vom Material der Widerstandsschicht und wird durch den k-Faktor ausgedrückt, wobei ein großer k-Faktor für starke Veränderung und somit hohe Empfindlichkeit steht. Konventionelle Dehnungsmessstreifen aus Metallfolien wie NiCr oder Konstantan weisen einen k-Faktor von 2 und eine vernachlässigbaren Querempfindlichkeit auf. Querempfindlichkeit bedeutet in dem Fall eine elektrische Widerstandsänderung bei einer Dehnung quer zur Längsrichtung des Dehnungsmessstreifens.

Aus WO2009/129930 A1 ist ein Schichtwiderstand mit einer Schicht aus kohlenstoffhaltigem Material, in die leitfähiges Material eingebracht ist, bekannt. Das leitfähige Material, beispielsweise Nickel, bildet dabei in der Schicht Cluster aus, die voneinander durch Kohlenstoff getrennt sind. Der Temperaturkoeffizient des elektrischen Widerstands wird durch den Anteil des Clustermaterials in der kohlenstoffhaltigen Schicht eingestellt. Der k-Faktor eines solchen Schichtwiderstands beträgt typischerweise mehr als 20. Dieser weist jedoch gleichzeitig eine hohe Querempfindlichkeit von bis zu 50% der Empfindlichkeit in Längsrichtung auf. Eine nicht vernachlässigbare Querempfindlichkeit wirkt sich nachteilig für Anwendungsgebiete wie die Spannungsanalyse aus.

Bei gleichbleibender Last, sowie konstanten Umgebungsbedingungen, insbesondere einer konstanten Temperatur, zeigen die für Sensoren verwendeten elastischen Elemente eine elastische Nachwirkung. Diese elastische Nachwirkung führt dazu, dass sich das Sensorsignal eines mit dem elastischen Element verbundenen Dehnungsmessstreifens trotz gleichbleibender Last und Umgebungsbedingungen über die Zeit kontinuierlich verändern würde. Dadurch würde die Messung verfälscht werden.

Auch die verwendeten Dehnungsmessstreifen zeigen bei gleichbleibender Last, sowie konstanten Umgebungsbedingungen, insbesondere einer konstanten Temperatur, eine kontinuierliche Veränderung des elektrischen Widerstands mit der Zeit, die als Relaxation bezeichnet wird. Die Relaxation ist der elastischen Nachwirkung entgegengesetzt und hängt von mehreren Faktoren wie einer Dicke der zur Verbindung mit dem elastischen Element verwendeten Klebstoffschicht, der Form des Messwiderstands etc. ab. Bei einem Sensor, welcher aus einem Dehnungsmessstreifen und einem elastischen Element besteht, wird der Einfluss der elastischen Nachwirkung und der Relaxation auch als Kriechverhalten des Sensors bezeichnet. Im günstigsten Fall kann bei einem solchen Sensor das Kriechverhalten zumindest teilweise kompensiert werden. Für eine möglichst vollständige Kompensation wäre es wünschenswert, die Relaxation des Dehnungsmessstreifens bzw. von dessen Messwiderstand gezielt anpassen zu können.

Sich verändernde Umgebungsbedingungen wirken sich ebenfalls auf den Messwiderstand aus. Bei einer Änderung der Temperatur erfolgt eine thermisch induzierte Änderung der Abmessungen des elastischen Elements, welche auch ohne Einwirkung einer externen Kraft nur aufgrund eines vollständigen Dehnungsübertrages zu einer Verformung des Dehnungsmessstreifens führt. Beispielsweise kann sich das elastische Element bei zunehmender Temperatur ausdehnen.

Des Weiteren ist der elektrische Widerstand des Messwiderstands temperaturabhängig. Zu dem Temperaturkoeffizienten des applizierten Dehnungsmessstreifens tragen sowohl die thermisch induzierte Änderung der Abmessungen des elastischen Elements als auch der Temperaturkoeffizient des elektrischen Widerstands des Messwiderstands bei. Sind diese Beiträge einander entgegengesetzt, so kann zumindest eine teilweise Kompensation erfolgen. Für eine Minimierung des Temperaturkoeffizienten des applizierten Dehnungsmessstreifens wäre es daher wünschenswert, die Temperaturabhängigkeit des Dehnungsmessstreifens bzw. die Temperaturabhängigkeit des Schichtwiderstands gezielt anpassen zu können.

Aus DE102015006057 A1 ist ein Schichtwiderstand mit einem kohlenstoffhaltigen Widerstandsmaterial bekannt. In dem Widerstandsmaterial sind in einer kohlenstoffhaltigen Schicht elektrisch leitfähige Cluster eingebettet, welche Chrom enthalten. Durch ein Anpassen des Gehalts an Chrom kann die Relaxation des Schichtwiderstands beeinflusst werden.

Nachteilig hieran ist, dass ein Eingriff in die Zusammensetzung des Widerstandsmaterials zu Begleiterscheinungen wie einer Reduktion der Dehnungsempfindlichkeit führen kann. Des Weiteren kann die Problematik der Querempfindlichkeit nicht behoben werden.

Eine Aufgabe der Erfindung kann darin gesehen werden einen Dehnungsmessstreifen bereitzustellen, bei dem die Relaxation und/oder ein Temperaturkoeffizient des elektrischen Widerstands und/oder die Querempfindlichkeit des Dehnungsmessstreifens ohne Änderungen an der Materialzusammensetzung gezielt eingestellt werden können.

Eine weitere Aufgabe der Erfindung kann darin gesehen werden, einen Sensor mit einem elastischen Element und einem Dehnungsmessstreifen bereitzustellen, bei dem der Temperaturkoeffizient und/oder die Querempfindlichkeit des Sensors und/oder das Kriechverhalten minimiert werden.

Eine weitere Aufgabe der Erfindung kann darin gesehen werden, einen Sensor mit einem elastischen Element und vier zu einer Wheatstone'schen Messbrücke verschalteten Dehnungsmessstreifen bereitzustellen, bei dem ein Kriechverhalten des Sensors minimiert wird.

Offenbarung der Erfindung

Es wird ein Dehnungsmessstreifen umfassend ein flexibles Substrat sowie eine auf dem flexiblen Substrat angeordnete Widerstandsschicht vorgeschlagen, wobei in der Widerstandsschicht mindestens ein Messwiderstand mit einer Leiterbahn durch Strukturierung der Widerstandsschicht ausgebildet ist, wobei der spezifische Widerstand der Widerstandsschicht abhängig von einer Dehnung der Widerstandsschicht ist und wobei die Widerstandsschicht eine Änderung des spezifischen Widerstands sowohl bei Dehnung in einer Längsrichtung als auch bei Dehnung in einer dazu senkrechten Querrichtung aufweist. Des Weiteren ist vorgesehen, dass der Dehnungsmessstreifen mindestens einen Freischnitt in Form eines abgedünnten Bereichs oder mindestens eines Einschnitts aufweist, wobei der mindestens eine Freischnitt innerhalb eines Leiterbahnabschnitts des Messwiderstandes angeordnet ist oder in einem Abstand von diesem entfernt angeordnet ist, welcher geringer ist als die zehnfache Dicke des flexiblen Substrats, wobei die Tiefe des mindestens einen Freischnitts von der Seite aus gesehen, auf der die Widerstandsschicht angeordnet ist, mindestens 1/100 der Breite des entsprechenden Leiterbahnabschnitts beträgt.

Der Messwiderstand weist einen aktiven Bereich auf, dessen elektrischer Widerstand gemessen werden soll. Des Weiteren weist der Messwiderstand einen Anschlussbereich auf. Der Anschlussbereich kann insbesondere Anschlussleitungen und elektrische Kontakte umfassen, welche eine elektrische Kontaktierung des Messwiderstands ermöglichen. Der aktive Bereich des Messwiderstands ist bevorzugt als eine mäanderförmig verlaufende Leiterbahn in der Widerstandsschicht ausgebildet, welche beispielsweise mehrere im Wesentlichen gerade verlaufende Abschnitte und zumindest einen als Schlaufe ausgestalteten gekrümmten Abschnitt aufweist.

Der Messwiderstand, der gegebenenfalls Anschlussleitungen und elektrische Kontakte umfasst, wird durch Strukturieren der Widerstandsschicht ausgebildet. Hierzu wird die Widerstandsschicht entweder gezielt in der gewünschten Form des Messwiderstands auf das flexible Substrat aufgetragen oder die Widerstandsschicht wird zunächst flächig auf das flexible Substrat aufgetragen und die gewünschte Form des Messwiderstands wird durch gezieltes Abtragen der Widerstandsschicht ausgebildet. Das Abtragen kann beispielsweise mittels Laserablation erfolgen, bei der die Widerstandsschicht mittels eines Lasers gezielt abgetragen wird. Bei dem Abtragen der Widerstandsschicht wird das flexible Substrat bevorzugt nicht beschädigt.

Durch das Strukturieren der Widerstandsschicht zur Ausbildung des mindestens einen Messwiderstands entsteht mindestens ein Bereich in der Widerstandsschicht auf dem flexiblen Substrat, welcher als Leiterbahnabschnitt bezeichnet wird. Insbesondere kann durch das Strukturieren der Widerstandsschicht eine den Messwiderstand darstellende Leiterbahn ausgebildet werden, deren einzelne Abschnitte als Leiterbahnabschnitte bezeichnet werden.

Entsprechend der Form des ausgebildeten Messwiderstands kann dieser mehrere Leiterbahnabschnitte umfassen, wobei ein Leiterbahnabschnitt beispielsweise ein länglicher Abschnitt des Messwiderstands sein kann. Ein Leiterbahnabschnitt kann beispielsweise auch ein im Wesentlichen gerader Teil länglicher Abschnitt der Leiterbahn des Messwiderstands sein oder ein gekrümmter Abschnitt der Leiterbahn des Messwiderstands sein.

Bei der Widerstandsschicht handelt es sich bevorzugt um eine auf das flexible Substrat aufgebrachte Schicht. Die Widerstandsschicht kann durch ein Beschichtungsverfahren aufgebracht werden. Beispiele für geeignete Beschichtungsverfahren sind PVD-Prozesse (physical vapor deposition, Physikalische Gasphasenabscheidung), wie beispielweise ein Sputterprozess, und CVD (chemical vapor deposition, chemische Gasphasenabscheidung). Dabei ist es beispielsweise auch denkbar, einen PVD-Prozess wie Sputtern mit einem CVD-Prozess zu kombinieren.

Das Material der Widerstandsschicht ist so gewählt, dass eine Änderung des spezifischen elektrischen Widerstands der Widerstandsschicht und damit eine Änderung des elektrischen Widerstands des mindestens einen Messwiderstands sowohl bei einer Dehnung bzw. Verformung entlang einer Längsrichtung, als auch bei einer Dehnung entlang einer dazu senkrechten Querrichtung erfolgt. Die Querempfindlichkeit der Widerstandsschicht beträgt mindestens 5%, bevorzugt mindestens 20%, besonders bevorzugt 35% und ganz besonders bevorzugt mindestens 50% der Längsempfindlichkeit.

Bei einer Dehnung bzw. Verformung des flexiblen Substrats wird auch der darauf angeordnete mindestens eine Messwiderstand gedehnt bzw. verformt. Durch gezieltes Anordnen von mindestens einem Freischnitt ist vorgesehen, die Übertragung einer Dehnung durch das flexible Substrat an den mindestens einen Messwiderstand zu beeinflussen.

Ein Freischnitt ist in einer Ausführungsvariante als ein Einschnitt in das flexible Substrat ausgeführt. Alternativ hierzu kann vorgesehen sein, den Freischnitt als einen flächigen Abtrag des flexiblen Substrats und somit als flächigen Bereich auszuführen. Die Tiefe des mindestens einen Freischnitts beträgt mindestens 1/100 der Breite des mindestens einen Leiterbahnabschnitts, auf dem der Freischnitt ausgeführt ist bzw. zu dem der Freischnitt beabstandet angeordnet ist.

Besonders bevorzugt beträgt die Tiefe des mindestens einen Freischnitts mindestens 1/50 der Breite des mindestens einen Leiterbahnabschnitts, besonders bevorzugt mindestens 1/20 der Breite des mindestens einen Leiterbahnabschnitts und ganz besonders bevorzugt mindestens 1/10 der Breite des mindestens einen Leiterbahnabschnitts. Als Breite eines Leiterbahnabschnitts wird dessen geringste Ausdehnung in der Ebene der Widerstandsschicht verstanden. Bei einem länglichen Leiterbahnabschnitt wird die kurze Seite dieses Leiterbahnabschnitts als Breite angesehen. Die Tiefe des Einschnitts wird von der Oberseite des flexiblen Substrats aus angegeben, wobei die Oberseite des flexiblen Substrats diejenige Seite ist, auf der die Widerstandsschicht angeordnet ist.

Die Tiefe des mindestens einen Freischnitts wird nur durch die Dicke des Substrats begrenzt. In einer Ausführungsform kann somit vorgesehen sein, dass im Bereich des mindestens einen Freischnitt das flexible Substrat vollständig entfernt wird.

Sofern der mindestens eine Freischnitt nicht innerhalb eines Leiterbahnabschnitts angeordnet ist, beträgt der Abstand zwischen dem mindestens einen Freischnitt und dem entsprechenden Leiterbahnabschnitt weniger als die zehnfache Dicke des flexiblen Substrats. Bevorzugt beträgt der Abstand weniger als die fünffache Dicke des flexiblen Substrats und ganz besonders bevorzugt weniger als die doppelte Dicke des flexiblen Substrats. Als Abstand wird dabei die kürzeste Strecke zwischen einem Freischnitt und dem nächstgelegenen Leiterbahnabschnitt angesehen. Der Freischnitt kann auch unmittelbar an den Leiterbahnabschnitt angrenzend angeordnet werden.

Ist der mindestens eine Freischnitt innerhalb eines Leiterbahnabschnitts angeordnet, so ist dieser bevorzugt mittig innerhalb des Leiterbahnabschnitts angeordnet.

Bevorzugt wird der mindestens eine Einschnitt so ausgestaltet, dass dieser in Form einer parallel zu dem mindestens einen Leiterbahnabschnitt verlaufenden Linie ausgeführt ist. Bei einem länglichen Leiterbahnabschnitt verläuft der mindestens eine Einschnitt somit entlang der Richtung, in die sich der längliche Leiterbahnabschnitt erstreckt. Der als Linie ausgeführte Einschnitt kann kontinuierlich ausgeführt sein oder in mehrere Abschnitte unterbrochen sein. Der Einschnitt kann entlang der gesamten Länge des mindestens einen Leiterbahnabschnitts verlaufen oder sich nur entlang eines Teils des Leiterbahnabschnitts erstrecken. Dabei kann insbesondere vorgesehen sein, dass der mindestens eine Einschnitt entlang der gesamten Länge einer den Messwiderstand bildenden Leiterbahn verläuft. Des Weiteren kann beispielsweise vorgesehen sein, dass mindestens ein Einschnitt über die gesamte Länge eines geraden Abschnitts des Messwiderstands bzw. von dessen Leiterbahn verläuft. Der mindestens eine Einschnitt kann auf einer Seite der Leiterbahn, auf beiden Seiten der Leiterbahn oder innerhalb der Leiterbahn selbst ausgebildet sein.

Die Breite des mindestens einen Leiterbahnabschnitts liegt bevorzugt im Bereich von 1/1000 der Dicke des flexiblen Substrats bis zu einer Breite, die dem Fünffachen der Dicke des flexiblen Substrats entspricht. Besonders bevorzugt entspricht die Breite des mindestens einen Leiterbahnabschnitts mindestens 1/100 der Dicke des flexiblen Substrats. Ganz besonders bevorzugt entspricht die Breite des mindestens einen Leiterbahnabschnitts mindestens 1/10 der Dicke des flexiblen Substrats. Als Breite des Leiterbahnabschnitts wird dessen geringste Ausdehnung angesehen.

Die Widerstandsschicht ist bevorzugt als eine Dünnschicht ausgeführt, welche auf dem flexiblen Substrat aufgebracht ist. Die Dicke der Dünnschicht liegt bevorzugt im Bereich von 10 nm bis 1000 nm, besonders bevorzugt im Bereich von 20 nm bis 500 nm und besonders bevorzugt im Bereich von 30 nm bis 250 nm.

Die Dünnschicht wird beispielsweise über ein Beschichtungsverfahren wie beispielsweise einem Sputter-Verfahren auf dem flexiblen Substrat abgeschieden. Beispielsweise kann ein reaktives Sputter-Verfahren verwendet werden, bei dem Kohlenstoff und ein Dotiermaterial auf dem flexiblen Substrat abgeschieden werden.

Bevorzugt ist das Material der Widerstandsschicht ausgewählt aus der Gruppe umfassend graphitartiger Kohlenstoff mit Me-Clustern, Me:a-C:H bzw. Me:a-C, Nanocermets, diamantähnlichem Kohlenstoff (DLC), Me-DLC, Me-Cluster eingebettet in einer Schicht umfassend eine Kombination mindestens zweier verschiedener Kohlenstoffmodifikationen, Me-Nanopartikel-Dünnschichten, Me-oxinitrid und Me-nitrid, wobei Me ein Metall oder eine Mischung mehrerer Metalle und a-C:H wasserstoffhaltiger amorpher Kohlenstoff bzw. a-C amorpher Kohlenstoff ist. Es versteht sich, dass insbesondere Kombinationen verschiedener Kohlenstoffmodifikationen in der Widerstandsschicht möglich sind, beispielsweise eine Kombination aus graphitartigem Kohlenstoff, der Me-Cluster umfüllt mit amorphem Kohlenstoff.

Bei Widerstandsschichten basierend auf Me:a-C:H oder Me:a-C bzw. die Me-Cluster enthalten sind die Metalle bzw. Metallmischungen vorzugsweise ausgewählt aus Ni, NiCr, Cr, V, NiV, Cu, W, Pt, Fe, Co, Ti, CrNiAl, Pt und Kombinationen dieser Metalle bzw. Metallmischungen.

Bei einer Widerstandsschicht basierend auf graphitartigem Kohlenstoff mit Me-Clustern sind elektrisch leitfähige Cluster in einer Matrix aus Kohlenstoff eingebettet. Die Cluster werden dabei jeweils von einer Hülle aus Kohlenstoffatomen umschlossen, welche in Form von graphitartigem Kohlenstoff vorliegt. Die Cluster weisen bevorzugt eine Größe im Bereich von 10 bis 500 nm, besonders bevorzugt von 30 bis 250 nm auf. Die Widerstandsschicht kann zusätzlich amorphen Kohlenstoff enthalten.

Des Weiteren kann das Material der Widerstandsschicht aus der Gruppe der Nanocermets bestehen, wobei Nanocermets eine Kombination aus Metallen, wie vorzugsweise Pt, Ni, Ti, Cr und Isolatorwerkstoffen, wie vorzugsweise $Al_2O_3$, $SiO_2$, BN sind.

Weiterhin kann das Material der Widerstandsschicht bestehen aus Me-$O_xN_y$ (Me-oxinitrid), wobei x den Sauerstoffanteil und y den Stickstoffanteil angibt. Die Anteile von Sauerstoff und Stickstoff können dabei jeweils von 0% bis 100% variieren, so dass beispielsweise der Anteil an Sauerstoff oder Stickstoff Null werden kann. Dabei ist Me ein Metall bzw. eine Mischung aus mehreren Metallen, wie vorzugsweise Cr, Ti, W, TiW, Pt und Kombinationen dieser Metalle bzw. Metallmischungen. Ein bevorzugtes Me-nitrid (also x=0) ist Chromnitrid (CrN).

Weitere Widerstandsschichten bestehen vorzugsweise aus diamantähnlicher Kohlenstoff (DLC), Me-DLC und Me-Nanopartikel-Dünnschichten.

Das flexible Substrat ist über seine gesamte Ausdehnung flexibel, so dass nicht nur der Bereich dehnbar und flexibel ist, in dem durch die Strukturierung der Widerstandsschicht der Messwiderstand ausgebildet ist. Die erfindungsgemäß vorgeschlagenen Freischnitte dienen somit nicht dazu, einem Teilbereich eines ansonsten starren Substrats eine gewisse Flexibilität zu verleihen. Vielmehr dienen die erfindungsgemäß vorgeschlagenen Freischnitte zur Anpassung von Eigenschaften des Dehnungsmessstreifens wie insbesondere des Wärmeausdehnungskoeffizienten und des Kriechwerts.

Bevorzugt ist das flexible Substrat eine flexible Folie, welche auf einem Polymer, einer Keramik oder einem Glas basiert. Besonders bevorzugt sind auf einem Polymer basierende Folien. Somit sind bevorzugte Dehnungsmessstreifen als Folien-Dehnungsmessstreifen ausgestaltet.

Basiert das flexible Substrat auf einem Polymer, so kann dieses insbesondere die üblicherweise im Zusammenhang mit Kunststoffen verwendeten Additive wie Füllstoffe und Verstärkungsstoffe enthalten. Ein Beispiel für Verstärkungsstoffe sind Fasern, wie beispielsweise Glasfasern, Aramidfasern oder Carbonfasern. Geeignete Polymere umfassen insbesondere Polyimid, Polyamid, Polyetheretherketon (PEEK) und Silikonkautschuk.

Das Material des flexiblen Substrats ist bevorzugt ausgewählt aus der Gruppe umfassend Polyimid, Polyamid, Polyetheretherketon (PEEK), Silikonkautschuk, Keramikfolien basierend auf Al2O3, ZrO2, SiN, AlN und LTCC, Glasfolien basierend auf SiO2 und Kombinationen mehrerer dieser Materialien. Das ausgewählte Material bzw. die ausgewählte Materialkombination kann zudem insbesondere Additive wie Füllstoffe und Verstärkungsstoffe enthalten.

Die Dicke des flexiblen Substrats liegt bevorzugt im Bereich von 12,5 $\mu$m bis 250 $\mu$m. Besonders bevorzugt liegt die Dicke des flexiblen Substrats im Bereich von 25 $\mu$m bis 125 $\mu$m.

Ein Beispiel für ein geeignetes flexibles Substrat ist eine Polyimidfolie mit einer Dicke von 50 $\mu$m.

Ist die Widerstandsschicht aus einem Material, das eine Längsempfindlichkeit und eine Querempfindlichkeit aufweist, beispielsweise mit einer Querempfindlichkeit die 50% der Längsempfindlichkeit beträgt, so wird ohne einen Freischnitt stets auch eine Querkontraktion des flexiblen Substrats und/oder eines mit dem flexiblen Substrat verbundenen flexiblen Elements mitgemessen. Grund hierfür ist der Dehnungsübertrag der Dehnungen des elastischen Elementes auf den Messwiderstand eines applizierten Dehnungsmessstreifens. So erhält man beispielsweise bei der Dehnungsmessung in Längsrichtung ein kleineres Signal mit Querkontraktion eines elastischen Elements als ohne.

Mit Hilfe eines Freischnitts kann der Dehnungsübertrag modifiziert werden. Wird beispielsweise der mindestens eine Freischnitt parallel zur Längsrichtung vorgenommen, so wird ein Dehnungsübertrag so verändert, dass der Beitrag einer Querdehnung des elastischen Elements nicht oder reduziert an die Widerstandsschicht und damit an den Messwiderstand übertragen wird. Der auf diese Weise freigeschnittene Teil des flexiblen Substrats kann sich nun bei einer reinen Dehnung in Längsrichtung entlang der Querrichtung entsprechend einschnüren. Ohne einen solchen Freischnitt wird ein Einschnüren in Querrichtung durch das restliche flexible Substrat bzw. durch das im Falle eines Sensors mit dem flexiblen Substrat verbundene elastische Element verhindert.

Bevorzugt umfasst der mindestens eine Freischnitt mindestens einen parallelen und in Längsrichtung verlaufenden Einschnitt, welcher auf einer Seite vom Leiterbahnabschnitt verläuft oder der mindestens eine Freischnitt umfasst mindestens zwei Einschnitte, welche beidseitig des mindestens einen Leiterbahnabschnitts verlaufen oder der mindestens eine Freischnitt umfasst mindestens einen in Längsrichtung verlaufenden Einschnitt, welcher innerhalb des mindestens einen Leiterbahnabschnitts angeordnet ist, wobei die Tiefe des mindestens einen Einschnitts derart gewählt ist, dass bei einer Dehnung des Dehnungsmessstreifens in Längsrichtung der den Messwiderstand umfassende Bereich des flexiblen Substrats an seiner durch das Widerstandsmaterial bedeckten Oberfläche eine Formänderung erfährt, die vollständig aus der Längsdehnung und aus der Poisson-Zahl-abhängigen Einschnürung des flexiblen Substrats resultiert.

Ist die Einschnürung des flexiblen Substrats im Bereich des Messwiderstands, also an der durch den Messwiderstand bedeckten Oberfläche des flexiblen Substrats, nur von der Längsdehnung und der Poisson-Zahl abhängig, so ändert sich der elektrische Widerstand des Messwiderstands nicht infolge einer von außen auf den Dehnungsmessstreifen einwirkenden Querdehnung, sondern ausschließlich durch die von außen induzierte Längsdehnung. Vorteilhafterweise wird dadurch erreicht, dass auch bei Verwendung eines Schichtwiderstands, welcher eine Querempfindlichkeit aufweist, eine uniaxiale Messung ermöglicht wird.

Ein weiterer Aspekt der Erfindung ist es, ein Sensorelement bereitzustellen, welches ein elastisches Element und mindestens einen der beschriebenen Dehnungsmessstreifen umfasst, wobei der Dehnungsmessstreifen mit dem elastischen Element verbunden ist.

Das elastische Element ist bevorzugt ein Kraftaufnehmer, Drehmomentaufnehmer, eine Druckmesszelle oder ein Dehnungsaufnehmer. Dabei ist das elastische Element so ausgestaltet, dass es sich bei Einwirkung einer Kraft verformt. Die Verformung überträgt sich auf den verbunden Dehnungsmessstreifen, dessen elektrischer Widerstand sich dann abhängig von der einwirkenden Kraft verändert. Beispiele für einen Kraftaufnehmer sind ein Biegebalken oder ein Doppelbiegebalken.

Der Dehnungsmessstreifen kann beispielsweise durch Verkleben mit dem elastischen Element verbunden sein.

Bei dem Dehnungsmessstreifen wird eine Widerstandsschicht verwendet, welche sowohl eine Längs- als auch eine Querempfindlichkeit aufweist. Durch das Verwenden einer Widerstandsschicht aus einem Material mit Längs- und Querempfindlichkeit trägt auch die Querempfindlichkeit zur Änderung des elektrischen Widerstands des Messwiderstands bei. Durch diesen Beitrag kommt bei der Relaxation des Dehnungsmessstreifens ein zusätzlicher Relaxationsbeitrag hinzu. Durch einen unterschiedlich ausgeprägten Freischnitt kann der Querempfindlichkeitsbeitrag der Relaxation des Dehnungsmessstreifen gezielt beeinflusst werden. Wird die Relaxation so eingestellt, dass es dem elastischen Nachwirken des elastischen Elements entgegengesetzt ist, so kann das Kriechverhalten des Sensors als Ganzes reduziert werden.

Bevorzugt weist das flexible Substrat des Dehnungsmessstreifens des Sensors mindestens einen Freischnitt auf. Bevorzugt wird die Tiefe des mindestens einen Freischnitts und/oder die Breite des mindestens einen Leiterbahnabschnitts so gewählt, dass das die Relaxation des mindestens einen Dehnungsmessstreifens bei einer vorgegebenen Krafteinwirkung auf das elastische Element nach einer vorgegebenen Wartezeit dem Nachwirken des elastischen Elements betragsmäßig entspricht und dem elastischen Nachwirken des elastischen Elements entgegengesetzt ist.

Bei einer vorgegebenen Last entspricht die elastische Nachwirkung des elastischen Elements der Relaxation des mindestens einen Dehnungsmessstreifens, wenn nach der vorgegebenen Zeit der Kriechwert bis auf einen tolerierten Fehler Null wird. Als tolerierbarer Fehler wird eine Abweichung von weniger als 0,5%, bevorzugt von weniger als 0,1%, besonders bevorzugt von weniger als 0,02% angesehen.

Des Weiteren kann bei einem Sensorelement bestehend aus einem elastischen Element und mindestens einem Dehnungsmessstreifen der Temperaturkoeffizient eingestellt werden.

Üblicherweise ist der Wärmeausdehnungskoeffizient des elastischen Elements von dem Wärmeausdehnungskoeffizienten des Substrats des Dehnungsmessstreifens verschieden. Dabei ist bevorzugt, dass die Tiefe des mindestens einen Freischnitts und/oder die Breite des mindestens einen Leiterbahnabschnitts so gewählt sind, dass ein Temperaturkoeffizient und/oder die Querempfindlichkeit des Sensorelements minimiert werden.

Der Temperaturkoeffizient des Sensors beschreibt die Veränderung der Sensorwerte bei Veränderung der Temperatur bei ansonsten gleichen Bedingungen, insbesondere bei gleicher Krafteinwirkung auf das elastische Element.

Zum Temperaturkoeffizient des Sensors tragen die thermisch induzierte Änderung der Abmessungen des elastischen Elements sowie die Temperaturabhängigkeit des elektrischen Widerstands der Widerstandsschicht bei. Die thermisch induzierte Änderung der Abmessungen des elastischen Elements führt auch ohne Einwirkung einer externen Kraft zu einer Verformung des Dehnungsmessstreifens. Die Stärke der thermisch induzierten Änderung der Abmessungen des elastischen Elements ist vom Ausdehnungskoeffizienten abhängig.

Ohne Freischnitt dominiert der Ausdehnungskoeffizient des elastischen Elements, da durch den Dehnungsübertrag auf den Dehnungsmessstreifen das flexible Substrat gezwungen wird sich entsprechend der Verformung des elastischen Elements auszudehnen. Das flexible Substrat kann sich nicht ungehindert und unabhängig vom elastischen Element verformen. Dies kann durch das Vorsehen von Freischnitten beeinflusst werden.

Ein weiterer Aspekt der Erfindung betrifft ein Verfahren zum Einstellen des Kriechverhaltens eines Sensorelements, wobei das Sensorelement mindestens einen der beschriebenen Dehnungsmessstreifen sowie ein elastisches Element umfasst, wobei das Kriechverhalten durch das Anpassen der Tiefe mindestens eines Freischnitts des mindestens einen Dehnungsmessstreifens eingestellt wird. Insbesondere kann hiermit eine Auslegung eines Sensorelements derart erfolgen, dass es ein bestimmtes vorgegebenes Kriechverhalten zeigt.

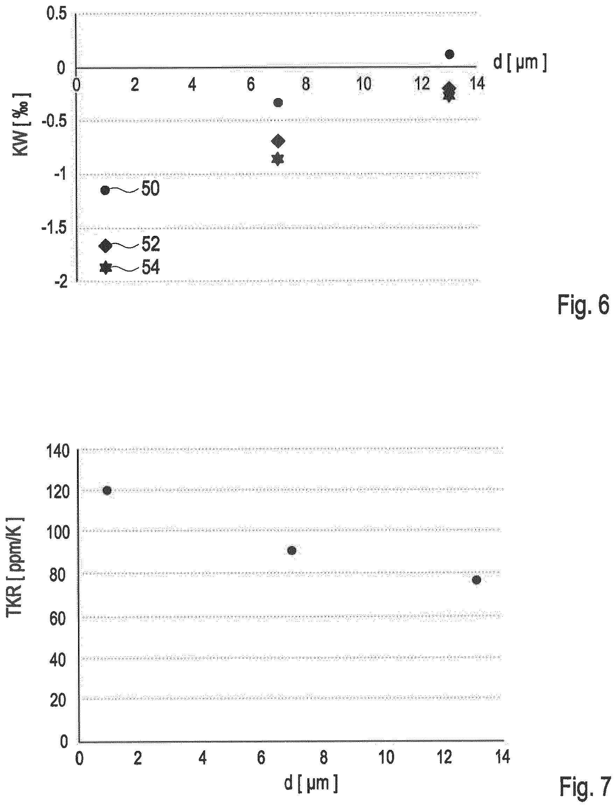

Dabei wird die Relaxation des Dehnungsmessstreifens im Falle eines einachsigen Dehnungszustandes entlang der Längsachse in positive Richtung verschoben, je größer die Tiefe des mindestens einen Freischnitts gewählt wird. Ausgehend von einem Kriechwert mit negativen Vorzeichen, wird somit der Kriechwert mit zunehmender Tiefe vergrößert, wobei der Absolutbetrag des Kriechwerts kleiner wird (vergleiche Figur 6). Bevorzugt wird der Dehnungsübertrag auf den Messwiderstand des Dehnungsmessstreifens durch Wahl der Tiefe so eingestellt, dass die Relaxation des Dehnungsmessstreifens bei einer vorgegebenen Krafteinwirkung auf das elastische Element nach einer vorgegebenen Wartezeit der elastischen Nachwirkung des elastischen Elements betragsmäßig entspricht und der elastischen Nachwirkung des elastischen Elements entgegengesetzt ist.

Bevorzugt werden zur Auslegung des Sensorelements mehrere Testsensoren gefertigt, welche bis auf die gewählte Tiefe des mindestens einen Freischnitts jeweils identisch aufgebaut sind. Anschließend wird für die Testsensoren jeweils der Kriechwert der Testsensoren bestimmt. Durch Analyse der Messwerte wird dann die optimale Tiefe für den mindestens einen Freischnitt bestimmt. Anschließend werden Sensorelemente mit der ermittelten Tiefe für den Freischnitt gefertigt.

Durch das Einstellen der Tiefe des Freischnitts auf den zuvor durch die Analyse bestimmten Wert kann das Kriechverhalten des Sensorelements gezielt eingestellt werden. Insbesondere kann bei der Auslegung des Sensorelements das Kriechverhalten minimiert werden. Dazu wird die Tiefe für den Freischnitt auf den Wert eingestellt, bei dem das Kriechen des Sensorelements umfassend den Dehnungsmessstreifen und das elastische Element gemäß der Analyse der Testsensoren gleich Null bzw. minimal ist. Die Minimierung erfolgt bevorzugt in einem vorgegebenen Temperaturbereich, der als Betriebstemperatur für das Sensorelement spezifiziert wird. Dazu können die Testsensoren insbesondere bei einer oder mehreren Temperaturen aus dem vorgegebenen Temperaturbereich getestet werden.

Das Kriechen wird bevorzugt für den Sensor als Ganzes bestimmt, wobei mindestens ein Dehnungsmessstreifen und ein elastisches Element zu einem Sensor kombiniert sind.

Der Sensor wird bei gleichbleibenden Umgebungsbedingungen, einer konstanten Kraft ausgesetzt, wobei die zeitliche Änderung des elektrischen Widerstands des Messwiderstands des Dehnungsmessstreifens beziehungsweise die zeitliche Änderung des Signals von vier in einer Wheatstone'schen Messbrücke verschalteten Messwiderstände gemessen wird.

Der Kriechwert (KW) in ‰ kann aus der zeitlichen Widerstands- bzw. Signaländerung nach der erfolgten Krümmung des Dehnungsmessstreifens bzw. des Sensorelements über die Beziehung

$$KW(t) = \frac{R_{belastet}(t) - R_{belastet}(0)}{R_{belastet}(0) - R_{unbelastet}} \cdot 1000$$

bzw.

$$KW(t) = \frac{S_{belastet}(t) - S_{belastet}(0)}{S_{belastet}(0) - S_{unbelastet}} \cdot 1000$$

erhalten werden. Hierbei ist $R_{belastet}(0)$ der Widerstandswert direkt nach der erfolgten Krümmung durch die Einwirkung der Kraft und $R_{belastet}(t)$ ist die des Widerstandswert zur Zeit t. $R_{unbelastet}$ beschreibt den Widerstandwert des unbelasteten Sensors. Entsprechendes gilt für das Brückensignal S.

Bei einer vorgegebenen Krafteinwirkung auf das elastische Element entspricht das elastische Nachwirken des elastischen Elements der Relaxation des mindestens einen Messwiderstands, wenn nach der vorgegebenen Zeit der Kriechwert des Sensorelements bis auf einen tolerierten Fehler Null wird. Als tolerierbarer Fehler wird eine Abweichung von weniger als 0,5%, bevorzugt von weniger als 0,1%, besonders bevorzugt von weniger als 0,02% angesehen.

Zum Ermitteln des optimalen Werts für die Tiefe des Einschnitts werden bevorzugt mehrere Testsensoren gefertigt, welche bis auf die gewählte Tiefe des Freischnitts jeweils identisch aufgebaut sind. Beispielsweise werden im Bereich von 2 bis 10 Testsensoren gefertigt, bevorzugt werden 3 bis 5 Testsensoren gefertigt. Die Tiefe des mindestens einen Freischnitts wird jeweils variiert. Der Kriechwert der Testsensoren wird bei gleichen Umgebungsbedingungen und gleicher Krafteinwirkung auf das elastische Element nach einer vorgegebenen Wartezeit von beispielsweise 15 Minuten ermittelt. Die für die verschiedenen Freischnitttiefen ermittelten Kriechwerte werden gegen die Tiefe des Freischnitts aufgetragen. Über eine Analyse der sich ergebenden Messwerte, beispielsweise durch Interpolation der Messwerte, kann anschließend ermittelt werden, für welche Tiefe des Freischnitts der Kriechwert nach der vorgegebenen Wartezeit den Wert Null erreicht. Anschließend können die Sensorelemente mit der ermittelten Tiefe für den Freischnitt gefertigt werden.

Ein weiterer Aspekt welcher nicht Gegenstand dieser Erfindung ist, ist ein Verfahren zum Minimieren des Temperaturkoeffizienten eines Sensorelements bereitzustellen, wobei das Sensorelement mindestens einen der beschriebenen Dehnungsmessstreifen sowie ein elastisches Element umfasst. Zum Temperaturkoeffizient des Sensors tragen die thermisch induzierte Änderung der Abmessungen des elastischen Elements sowie die Temperaturabhängigkeit des elektrischen Widerstands der Widerstandsschicht bei. Insbesondere kann hiermit eine Auslegung eines Sensorelements derart erfolgen, dass es eine bestimmte vorgegebene Temperaturabhängigkeit zeigt. Bevorzugt wird die Temperaturabhängigkeit so vorgegeben, dass diese minimiert wird. Die Minimierung erfolgt bevorzugt in einem vorgegebenen Temperaturbereich, der als Betriebstemperatur für das Sensorelement spezifiziert wird. Dazu können die Testsensoren insbesondere bei einer oder mehreren Temperaturen aus dem vorgegebenen Temperaturbereich getestet werden.

Bei dem Verfahren wird für den Fall, dass der Wärmeausdehnungskoeffizient des Substrats des Dehnungsmessstreifens kleiner ist als der Wärmeausdehnungskoeffizient des elastischen Elements, durch Vergrößern der Tiefe des mindestens einen Freischnitts der Temperaturkoeffizient des Sensorelements in negative Richtung verschoben. Ausgehend von einem Temperaturkoeffizienten mit positiven Vorzeichen wird mit zunehmender Tiefe der Temperaturkoeffizient verringert, wobei auch der Absolutbetrag des Temperaturkoeffizienten kleiner wird (vergleiche Figur 7). Für den Fall, dass der Wärmeausdehnungskoeffizient des Substrats des Dehnungsmessstreifens größer ist als der Wärmeausdehnungskoeffizient des elastischen Elements, wird durch Vergrößern der Tiefe des mindestens einen Freischnitts der Temperaturkoeffizient des Sensorelements in positiver Richtung verschoben, also vergrößert. Dabei ist vorgesehen, dass die Tiefe des mindestens einen Freischnitts derart gewählt wird, dass der Betrag des Temperaturkoeffizienten des Sensorelements minimal wird.

Zum Ermitteln des optimalen Werts für die Tiefe des Einschnitts werden bevorzugt mehrere Testsensoren gefertigt, welche bis auf die gewählte Tiefe des Freischnitts jeweils identisch aufgebaut sind. Beispielsweise werden im Bereich von 2 bis 10 Testsensoren gefertigt, bevorzugt werden 3 bis 5 Testsensoren gefertigt. Die Tiefe des mindestens einen Freischnitts wird jeweils variiert. Anschließend wird für jeden der Testsensoren der Temperaturkoeffizient bestimmt. Zum Bestimmen des Temperaturkoeffizienten wird beispielsweise der elektrische Widerstand bei zwei verschiedenen Temperaturen ermittelt. Die erhaltenen Werte für den Temperaturkoeffizienten werden gegen die Tiefe des mindestens einen Freischnitts aufgetragen. Durch Analyse der Messwerte, beispielsweise durch Interpolation auf den Wert Null, wird die optimale Tiefe für den Freischnitt bestimmt. Anschließend können die Sensorelemente mit der ermittelten Tiefe für den Freischnitt gefertigt werden.

Um die Temperaturabhängigkeit zu minimieren, wird die Tiefe des Freischnitts bevorzugt auf den Wert eingestellt, für den bei der Analyse der Messwerte keine bzw. die geringste Temperaturabhängigkeit ermittelt wurde.

Ein weiterer Aspekt welcher nicht Gegenstand dieser Erfindung ist, ein Verfahren zum Minimieren der Querempfindlichkeit eines hier beschriebenen Dehnungsmessstreifens und/oder eines der beschriebenen Sensorelemente bereitzustellen. Insbesondere kann hiermit eine Auslegung eines Dehnungsmessstreifens bzw. eines Sensorelements derart erfolgen, dass dieser eine bestimmte vorgegebene Querempfindlichkeit zeigt, welche bevorzugt minimiert wird.

Bei dem Verfahren werden bevorzugt mehrere Testsensoren gefertigt, welche bis auf die gewählte Tiefe des mindestens einen Freischnitts jeweils identisch aufgebaut sind, wobei bei den Testsensoren die Längsrichtungen der Dehnungsmessstreifen quer zu einer Längsrichtung des elastischen Elements ausgerichtet sind. Anschließend werden die Testsensoren unterschiedlichen Belastungen ausgesetzt und die Signaländerung des Sensorelements werden bestimmt wird. Die Belastung ist dabei insbesondere eine Dehnung des Sensorelements entlang der Längsrichtung des elastischen Elements. Durch Analyse der Messwerte wird die optimale Tiefe für den mindestens einen Freischnitt bestimmt, wobei bei der optimalen Tiefe (d) die geringste Querempfindlichkeit des Dehnungsmessstreifens, erreicht wird. Anschließend werden Dehnungsmessstreifen und/oder Sensorelemente mit der ermittelten Tiefe für den Freischnitt gefertigt.

Zur Querempfindlichkeit des Dehnungsmessstreifens trägt der Dehnungsübertrag vom elastischen Element auf die Widerstandsschicht des Dehnungsmessstreifens bei. Dabei muss die Tiefe des Einschnittes so gewählt werden, dass kein Dehnungsübertrag vom elastischen Element quer zum Schnittverlauf auf den Messwiderstand des Dehnungsmessstreifens stattfindet und dadurch die Querkontraktion des elastischen Elementes nicht mehr zum Sensorsignal beiträgt.

Zur Bestimmung der Querempfindlichkeit werden die Dehnungsmessstreifen auf ein elastisches Element mit einem einachsigen Dehnungszustand appliziert. Die Anordnung der Längsrichtung der Dehnungsmessstreifen erfolgt quer zur Dehnungsachse des elastischen Elementes.

Zur Bestimmung der Querempfindlichkeit werden die Testsensoren unterschiedlichen Belastungen ausgesetzt und die Signaländerung notiert. Die erhaltenen Werte für die Querempfindlichkeit werden gegen die Tiefe des mindestens einen Freischnitts aufgetragen. Durch Analyse der Messwerte, beispielsweise durch Interpolation auf den Wert Null, wird die optimale Tiefe für den Freischnitt bestimmt. Anschließend können die Dehnungsmessstreifen mit der ermittelten Tiefe für den Freischnitt gefertigt werden.

Bevorzugt wird die optimale Tiefe für den Freischnitt derart festgelegt, dass für die optimale Tiefe die Querempfindlichkeit minimal wird.

Kurze Beschreibung der Figuren

Es zeigen:

Figur 1      ein Dehnungsmessstreifen in einer Ansicht von oben,

Figur 2      eine perspektivische Darstellung eines Ausschnitts eines Dehnungsmessstreifens ohne Freischnitte,

Figur 3      eine perspektivische Darstellung eines Ausschnitts eines ersten Ausführungsbeispiels eines Dehnungsmessstreifens,

Figur 4     eine perspektivische Darstellung eines Ausschnitts eines zweiten Ausführungsbeispiels eines Dehnungsmessstreifens,

Figur 5a)    ein Sensorelement zum Bestimmen des Kriechwerts,

Figur 5b)    Ein Sensorelement zum Bestimmen des Temperaturkoeffizienten,

Figur 6     ein Diagramm mit Kriechwerten bei verschiedenen Einschnitttiefen und verschiedenen Temperaturen,

Figur 7     eine Darstellung des Temperaturkoeffizienten bei verschiedenen Einschnitttiefen,

Figur 8     ein weiteres Sensorelement zum Bestimmen der Querempfindlichkeit, und

Figur 9     eine Darstellung der Querempfindlichkeit bei zwei verschiedenen Einschnitttiefen.

In der nachfolgenden Beschreibung der Ausführungsbeispiele der Erfindung werden gleiche oder ähnliche Komponenten und Elemente mit gleichen Bezugszeichen bezeichnet, wobei auf eine wiederholte Beschreibung dieser Komponenten oder Elemente in Einzelfällen verzichtet wird. Die Figuren stellen den Gegenstand der Erfindung nur schematisch dar.

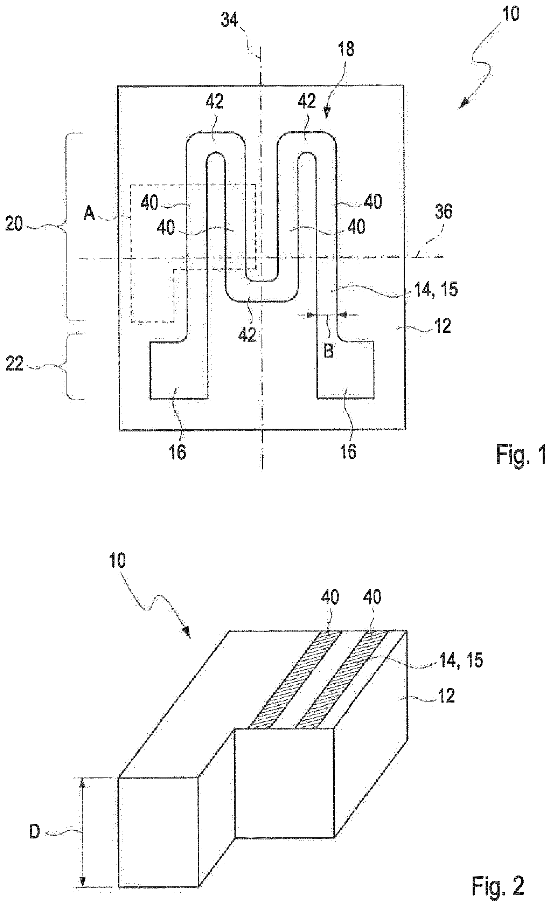

In Figur 1 ist ein Dehnungsmessstreifen 10 in einer Ansicht von oben dargestellt. Der Dehnungsmessstreifen 10 umfasst ein flexibles Substrat 12, auf dem eine Widerstandsschicht 14 angeordnet ist. Durch Strukturieren der Widerstandsschicht 14, beispielsweise mittels Laserablation, wurde die Widerstandsschicht 14 selektiv entfernt, so dass in dem Widerstandsmaterial 14 eine Leiterbahn 15 ausgebildet ist. Das Widerstandsmaterial 14 ist dabei so strukturiert, dass ein Messwiderstand 18 mit einem aktiven Bereich 20 und einem Kontaktbereich 22 ausgebildet ist. Der Kontaktbereich 22 umfasst in dem dargestellten Beispiel zwei elektrische Kontakte 16, über die eine elektrische Verbindung zum Messwiderstand 18 hergestellt werden kann. In weiteren Ausführungsvarianten kann der Kontaktbereich 22 auch beispielsweise vier elektrische Kontakte 16 umfassen, über die eine Vierleitermessung des elektrischen Widerstands erfolgen kann.

Der aktive Bereich 20 des Messwiderstands 18 umfasst mehrere Leiterbahnabschnitte 40 und 42. In dem in Figur 1 dargestellten Beispiel umfasst der Messwiderstand 18 vier Leiterbahnabschnitte 40, 42, welche als gerade Leiterbahnabschnitte 40 ausgeführt sind, und drei Leiterbahnabschnitte 40, 42, welche als gekrümmte Leiterbahnabschnitte 42 ausgeführt sind. Die geraden Leiterbahnabschnitte 40, die gekrümmten Leiterbahnabschnitte 42 und die beiden elektrischen Kontakte 16 bilden dabei eine mäanderförmige Leiterbahn 15 des Messwiderstands 18 aus. Die Leiterbahnabschnitte 40, 42 der Leiterbahn 15 weisen dabei jeweils eine Breite auf, wobei die Breite der geraden Abschnitte 40 mit dem Bezugszeichen "B" gekennzeichnet ist. Die geraden Abschnitte 40 verlaufen im in Figur 1 dargestellten Beispiel jeweils parallel zu einer Längsrichtung 34 des Dehnungsmessstreifens 10. Eine Querrichtung 36 verläuft senkrecht zur Längsrichtung 34.

Wird der Dehnungsmessstreifen 10 gedehnt, so überträgt sich die Dehnung vom flexiblen Substrat 12 auf den in der Widerstandsschicht 14 ausgebildeten Messwiderstand 18. Eine Dehnung des Messwiderstands 18 kann dann über eine Veränderung des elektrischen Widerstands gemessen werden.

Der mit der gestrichelten Linie mit dem Bezugszeichen "A" markierte Bereich wird in den nachfolgenden Figuren 2 bis 4 perspektivisch dargestellt.

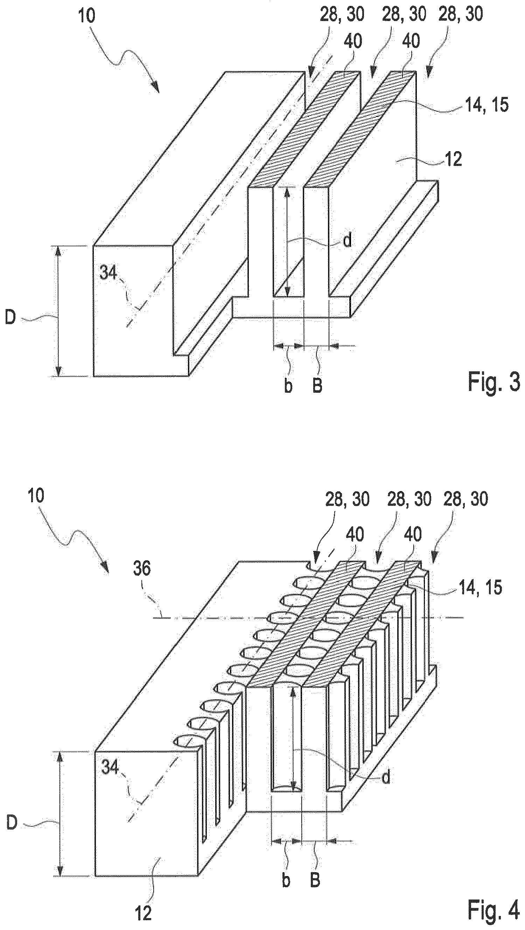

Figur 2 zeigt den Ausschnitt A des Dehnungsmessstreifens 10 der Figur 1 in einer perspektivischen Darstellung. Der in Figur 2 dargestellte Ausschnitt weist noch keinen Freischnitt 28 auf, vergleiche Figuren 3 und 4.

In dem in Figur 2 dargestellten Ausschnitt ist zu erkennen, dass durch das Strukturieren der Widerstandsschicht 14 zwei gerade Leiterbahnabschnitte 40 ausgebildet wurden. Bei der Strukturierung der Widerstandschicht 14 wird das Material der Widerstandsschicht 14 selektiv entfernt, wobei das flexible Substrat 12 dabei nicht abgetragen wird. Das flexible Substrat 12 weist eine Dicke auf, welche in der Figur 2 mit dem Bezugszeichen "D" gekennzeichnet wurde. Die Dicke des flexiblen Substrats 12 ist in dem dargestellten Ausschnitt konstant.

In Figur 3 ist der Ausschnitt A des Dehnungsmessstreifens 10 der Figur 1 perspektivisch dargestellt. In der Figur 3 weist der Dehnungsmessstreifen 10 ein erstes Ausführungsbeispiel für Freischnitte 28 auf. In dem ersten Ausführungsbeispiel sind in dem gezeigten Ausschnitt drei Freischnitte 28 zu erkennen, welche jeweils als ein Einschnitt 30 ausgeführt sind. Die Einschnitte 30 sind jeweils als parallel zu einem geraden Leiterbahnabschnitt 40 verlaufende Linien ausgeführt und bilden in dem flexiblen Substrat 12 Gräben mit einer Tiefe d und einer Breite b aus. Des Weiteren ist in der Figur 3 zu erkennen, dass die Einschnitte 30 jeweils parallel zu der Längsrichtung 34 des Dehnungsmessstreifens 10 verlaufen. Die Einschnitte 30 verlaufen dabei entlang der gesamten dargestellten Länge der geraden Leiterbahnabschnitte 40, direkt an diesen angrenzend.

Wird nun der Dehnungsmessstreifen 10 entlang der Längsrichtung 34 gedehnt, so überträgt sich die Dehnung vom flexiblen Substrat 12 nahezu unverändert auf die Widerstandsschicht 14, welche auf der Oberseite des flexiblen Substrats 12 angeordnet ist. Bei einer Dehnung in der dazu senkrecht verlaufenden Querrichtung 36 hingegen wird die Dehnung nicht oder zumindest nur im geringen Umfang bis zur auf der Oberseite des flexiblen Substrats 12 angeordneten Widerstandsschicht 14 übertragen. Ist die Tiefe d der Einschnitte 30 ausreichend groß, so ist eine Verformung der mit der Widerstandsschicht 14 bedeckten Oberfläche bei einer Dehnung in Längsrichtung 34 nur noch von der Dehnung und der Poisson-Zahl des Materials des flexiblen Substrats abhängig.

Bei dem in Figur 3 dargestellten Ausführungsbeispiel weist der Dehnungsmessstreifen somit keine oder zumindest eine deutlich reduzierte Empfindlichkeit in Querrichtung 36 auf. Somit kann ein Dehnungsmessstreifen 10 realisiert werden, der auch bei Verwendung eines Materials mit Längs- und Querempfindlichkeit für die Widerstandsschicht 14 nur auf eine Dehnung in Längsrichtung 34 mit einer Veränderung des elektrischen Widerstands reagiert. Diese Schnittform kann vorzugsweise bei der Querempfindlichkeitseliminierung gewählt werden.

Figur 4 zeigt wieder den Ausschnitt A des Dehnungsmessstreifens 10 der Figur 1 in einer perspektivischen Darstellung. Wie bereits mit Bezug zur Figur 3 beschrieben, weist der Dehnungsmessstreifen 10 drei als Einschnitte 30 ausgeführte Freischnitte 28 auf, welche jeweils parallel zu beiden Seiten der beiden dargestellten geraden Leiterbahnabschnitten 40 verlaufen.

Im Gegensatz zum ersten Ausführungsbeispiel der Einschnitte 30 der Figur 3 sind die Einschnitte 30 im zweiten Ausführungsbeispiel der Figur 4 als unterbrochene Linie ausgestaltet. Die Einschnitte 30 bilden somit keinen kontinuierlichen Graben aus, sondern sind als eine Vielzahl von Linienabschnitten oder wie in Figur 4 gezeigt, als eine Vielzahl von Löchern im flexiblen Substrat 12 ausgestaltet. Die Löcher sind dabei entlang von Linien angeordnet, welche parallel zu den beiden dargestellten geraden Leiterbahnabschnitten 40 verlaufen und jeweils zu beiden Seiten der geraden Leiterbahnabschnitten 40 angeordnet sind. Die Einschnitte 30 weisen wieder eine Tiefe d und eine Breite b auf. Im Fall der Löcher wie in Figur 14 gezeigt, wird der Durchmesser der Löcher als Breite b des Einschnitts 30 aufgefasst.

Auch in dem zweiten Ausführungsbeispiel der Freischnitte 28 wird durch die parallel zur Längsrichtung 34 verlaufenden Einschnitte 30 eine Übertragung einer Dehnung des Dehnungsmessstreifens 10 entlang der Querrichtung 36 auf die an der Oberfläche des flexiblen Substrats 12 angeordnete Widerstandsschicht 14 reduziert, so dass der Dehnungsmessstreifen 10 auch bei Verwendung eines Materials mit Längs- und Querempfindlichkeit für die Widerstandsschicht 14 reduziert auf eine Dehnung in Querrichtung 36 mit einer Veränderung des elektrischen Widerstands reagiert. Diese Schnittform kann vorzugsweise bei der Kriech- oder Temperaturkoeffizientanpassung gewählt werden.

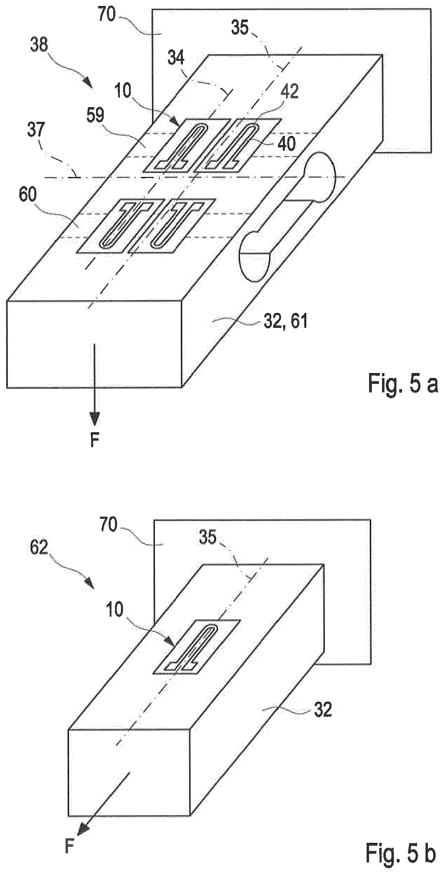

In Figur 5a ist ein Sensorelement 38 dargestellt, welches ein elastisches Element 32 und vier mit dem elastischen Element 32 verbundene Dehnungsmessstreifen 10 umfasst. Das elastische Element 32 ist als Doppelbiegebalken 61 ausgeführt.

Zum Messen einer Kraft F wird ein Ende des Doppelbiegebalkens 61 an einem Befestigungselement 70 fest eingespannt und das andere Ende mit der zu messenden Kraft F beaufschlagt, so dass sich der Doppelbiegebalken 61 verbiegt. Dabei verformt sich die Oberfläche des Doppelbiegebalkens 61 und bildet sowohl eine Dehnungszone 59 als auch eine Stauchungszone 60 aus. Diese Dehnungen werden an die mit dem Doppelbiegebalken 61 verbundenen Dehnungsmessstreifen 10 übertragen. Verschaltet zu einer Wheatstone'schen Vollbrücke führt eine Veränderung des elektrischen Widerstands eines Messwiderstands 18 des jeweiligen Dehnungsmessstreifens 10 zur einer Brückensignaländerung.

Wie der Darstellung der Figur 5a entnommen werden kann, sind die Längsachsen 34 der Dehnungsmessstreifen 10 jeweils parallel zu einer Längsachse 35 des elastischen Elements 10 ausgerichtet.

In Figur 5b ist ein Sensorelement 62 dargestellt, welches ein elastisches Element 32 und ein mit dem elastischen Element 32 verbundene Dehnungsmessstreifen 10 umfasst. Das elastische Element 32 ist als Stab ausgeführt.

Zum Messen einer Dehnung wird ein Ende des Stabes fest eingespannt und das andere Ende mit einer Kraft F beaufschlagt, die entlang der Längsachse 35 des elastischen Elementes 32 wirkt und die zu messende Dehnung verursacht. Dabei längt sich der Stab aus und bildet eine Dehnungszone, in der sowohl eine Längsdehnung als auch aus der Poisson-Zahl des elastischen Elementes 32 resultierende Querdehnung vorliegt. Diese Dehnungen werden an den mit dem Stab verbundenen Dehnungsmessstreifen 10 übertragen. Eine Dehnung des Dehnungsmessstreifens 10 kann elektrisch über eine Veränderung des elektrischen Widerstands eines Messwiderstands 18 des Dehnungsmessstreifens 10 gemessen werden.

Wird statt der Kraft F eine veränderliche Temperatur angelegt, wird durch die Messung des elektrischen Widerstands des Messwiderstands 18 der Temperaturkoeffizient des Sensorelements 62 gemessen.

Figur 6 zeigt ein Diagramm, in dem der Kriechwert KW von drei verschiedenen Sensorelementen 38 für jeweils drei verschiedene Temperaturen dargestellt ist.

Für das Durchführen der in Figur 6 dargestellten Messung wurden drei Sensorelemente 38 hergestellt, bei denen jeweils vier identisch aufgebaute Dehnungsmessstreifen 10, die als Wheatstone'sche Vollbrücke verschaltet waren, und mit einem Doppelbiegebalken 61 verklebt wurden. Alle Dehnungsmessstreifen 10 umfassen eine 50 μm dicke Polyimidfolie als flexibles Substrat 12. Als Widerstandsschicht 14 wurde eine NiCr:a-C:H Schicht mit 90% Nickel und 10% Chrom nach Gewicht aufgesputtert. Mittels Laserablation wurde ein mäanderförmiger Messwiderstand 18 ausgebildet, welcher ähnlich wie in Figur 5a skizziert zwei längliche Abschnitte 40 aufweist, welche mit einem gekrümmten Abschnitt 42 in Form einer Umkehrschlaufe miteinander verbunden sind. Die Breite B der länglichen Leiterbahnabschnitte 40 des Messwiderstands 18 beträgt 100 μm.

Ebenfalls durch Abtragen mit einem Laser wurden in den drei verschiedenen Sensorelementen 38 Freischnitte 28 vorgenommen. Die Freischnitte 28 sind jeweils als Einschnitte 30 ausgeführt, wobei die Einschnitte 30 auf beiden Seiten der Leiterbahn 15 über deren gesamte Länge verlaufen. Die Einschnitte 30 sind wie mit Bezug zur Figur 3 beschrieben ausgeführt. Die Tiefe d der Einschnitte 30 wurde jeweils variiert und beträgt 1 μm, 7 μm und 13 μm. Die Einschnitte 30 grenzen jeweils unmittelbar an die Leiterbahn 15. Die Breite b der Einschnitte beträgt 200 μm.

Jeweils vier identische Dehnungsmessstreifen 10 wurden mit einem Doppelbiegebalken als elastisches Element 32 durch Kleben verbunden und für eine Messung des Brückensignal als Wheatstone'sche Vollbrücke verschaltet. Wie in Figur 5a) skizziert wurde dabei die Längsachse 34 der Dehnungsmessstreifen 10 parallel zu der Längsachse 35 des elastischen Elements 32 ausgerichtet. Zum Ermitteln des Kriechwerts der Sensorelemente 38 wurde jeweils ein Ende der Doppelbiegebalken 61 fest eingespannt und das andere Ende mit einer konstanten Kraft F beaufschlagt. Die Kraft F erzeugt dabei eine Dehnung des elastischen Elementes 32 von 1‰. Wobei die Dehnung sowohl in der Dehnungs- 59 als auch in der Stauchungszone 60 betragsmäßig gleich ist.

Der Kriechwert (KW) in ‰ kann aus der zeitlichen Signaländerung nach der erfolgten Krümmung des Sensorelements 38 erhalten werden, wobei dazu die Abweichung des Brückensignals nach einer bestimmten Wartezeit mit dem Brückensignal direkt nach der erfolgten Krümmung durch die Einwirkung der Kraft F in Bezug gesetzt wird.

Das Diagramm der Figur 6 zeigt den Kriechwert (KW) in ‰ jeweils nach einer Wartezeit von 15 Minuten für die Sensorelemente 38 mit den Tiefen d der Einschnitte von 1 μm, 7 μm und 13 μm für drei verschiedene Umgebungstemperaturen. Die mit dem Bezugszeichen 50 gekennzeichnete erste Datenreihe zeigt den Kriechwert für eine Temperatur von 30°C, die zweite Datenreihe 52 zeigt den Kriechwert für eine Temperatur von 55°C und die dritte Datenreihe 54 zeigt den Kriechwert für eine Temperatur von 85°C.

Wie der Darstellung in Figur 6 entnommen werden kann, ist für eine Tiefe d der Freischnitte 28 der Kriechwert des Sensorelements näherungsweise Null. Das bedeutet, dass bei dieser Tiefe d die Relaxation der applizierten Dehnungsmessstreifen 10 dem elastischen Nachwirken des elastischen Elements 32 entgegengesetzt ist und diesem betragsmäßig entspricht.

Figur 7 zeigt ein Diagramm, in dem der Temperaturkoeffizient in ppm/K von drei verschiedenen Sensorelementen 38 mit drei verschiedenen Tiefen d der Freischnitte 28 dargestellt ist.

Die für die in Figur 7 dargestellte Messung verwendeten Sensorelemente 38 wurden wie mit Bezug zur Messung des Kriechwerts beschrieben hergestellt. Die Dehnungsmessstreifen 10 wurden zu einer Messbrücke verschaltet. Die Umgebungstemperatur wurde im Bereich von -15°C bis 85°C variiert und der Temperaturkoeffizient anhand der Änderung von Brückeneingangswiderständen ermittelt. Die Brückeneingangswiderstände werden über die Speisespannungsanschlüsse abgegriffen. Die Ergebnisse der Messung sind in Figur 7 gegen die Tiefe d der Freischnitte 28 aufgetragen. Aus der Darstellung der Figur 7 ist zu erkennen, dass der Temperaturkoeffizient TKR für steigende Tiefe d der Freischnitte 28 zu kleineren Werten verschoben wird. Durch eine Extrapolation der Messwerte kann die optimale Tiefe d der Freischnitte 28 ermittelt werden, mit der der Temperaturkoeffizient TKR des Sensorelements 38 minimiert wird.

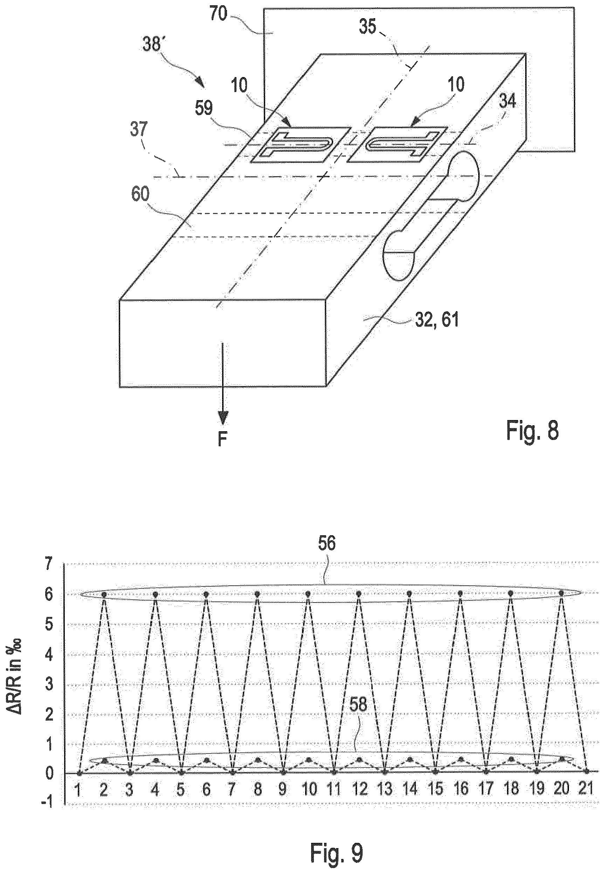

In Figur 8 ist ein weiteres Sensorelement 38' dargestellt, welches ein elastisches Element 32 und zwei mit dem elastischen Element 32 verbundene Dehnungsmessstreifen 10 umfasst. Die Dehnungsmessstreifen 10 sind in die Dehnungszone 59 des elastischen Elementes 32 geklebt und das elastische Element 32 ist als Doppelbiegebalken 61 ausgeführt.

Das in Figur 8 dargestellte weitere Sensorelement 38' ist zum Ermitteln der Querempfindlichkeit der Dehnungsmessstreifen 10 bestimmt. Dazu sind die Längsrichtungen 34 der Dehnungsmessstreifen 10 jeweils senkrecht zur Längsrichtung 35 des elastischen Elements 32 ausgerichtet.

Figur 9 zeigt eine Messung zur Ableitung der Querempfindlichkeit von zwei verschiedenen Dehnungsmessstreifen 10. Die Dehnungsmessstreifen 10 wurden wie mit Bezug zur Messung des Kriechwerts beschrieben hergestellt, wobei jeweils zwei Dehnungsmessstreifen 10 mit unterschiedlicher Tiefe d der Freischnitte wie in Figur 8 skizziert mit einem elastischen Element 32 zu einem weiteren Sensorelement 38' kombiniert wurden, um einen direkten Vergleich zu ermöglichen.

Die Messwiderstände 18 wurden elektrisch kontaktiert, um deren elektrischen Widerstand zu messen. Dabei wurde zunächst der elektrische Widerstand des Messwiderstands 18 vor einer Belastung des weiteren Sensorelements 38' gemessen. Ein Ende des weiteren Sensorelements 38' wurde fest eingespannt und das andere Ende wechselweise mit einer Last beaufschlagt, die 1‰ Dehnung erzeugt, und wieder vollständig entlastet. Die Änderung des elektrischen Widerstands ΔR des Messwiderstands 18 wurde bei jedem Lastwechsel mit dem vor Beginn der Lastwechsel ermittelten Widerstand R in Bezug gesetzt und in ‰ angegeben. In dem Diagramm der Figur 9 sind auf der X-Achse die Lastwechsel und auf der Y-Achse die Änderung des elektrischen Widerstands ΔR mit Bezug auf den ursprünglichen Widerstandswert R in ‰ aufgetragen. Die mit dem Bezugszeichen 56 gekennzeichneten Messpunkte zeigen dabei die Messwerte unter Last eines weiteren Sensorelements 38', bei dem die Tiefe d der Freischnitte 1 μm beträgt. Die mit dem Bezugszeichen 58 gekennzeichneten Messpunkte zeigen die Messwerte unter Last eines weiteren Sensorelements 38', bei dem die Tiefe d der Freischnitte 35 μm beträgt.

Wie sich der Darstellung des Diagramms der Figur 9 entnehmen lässt, ist bei dem Sensorelement 38' mit den tieferen Freischnitten 28 die relative Widerstandsänderung um den Faktor 10 reduziert. Diese signifikant hohe Reduktion verdeutlicht die Wirkweise. Die vollständige Reduzierung der relativen Widerstandsänderung, lässt sich in diesem Fall nicht erzielen, da noch eine geringe Querkontraktion des Doppelbiegebalkens 61 vorhanden ist.

Bezugszeichenliste

| | |
|---|---|
| 10 | Dehnungsmessstreifen |
| 12 | flexibles Substrat |
| 14 | Widerstandsschicht |
| 15 | Leiterbahn |
| 16 | Kontakt |
| 18 | Messwiderstand |
| 20 | aktiver Bereich |
| 22 | Anschlussbereich |
| | |
| 28 | Freischnitt |
| 30 | Einschnitt |
| d | Tiefe des Einschnitts |
| D | Dicke flexibles Substrat |
| B | Breite Leiterabschnitt |
| b | Breite des Einschnitts |
| A | Ausschnitt |
| 32 | elastisches Element |
| 34 | Längsrichtung |
| 35 | Längsrichtung (elastisches Element) |
| 36 | Querrichtung |
| 37 | Querrichtung (elastisches Element) |
| 38 | Sensorelement |
| 38' | weiteres Sensorelement |
| 40 | gerader Leiterbahnabschnitt |
| 42 | gekrümmter Leiterbahnabschnitt |
| | |
| KW | Kriechwert |
| TKR | Temperaturkoeffizient |
| | |
| 50 | Datenreihe 30 °C |
| 52 | Datenreihe 55 °C |
| 54 | Datenreihe 85 °C |
| | |
| 56 | Datenreihe Freischnitt 1 μm |
| 58 | Datenreihe Freischnitt 35 μm |
| 59 | Dehnungszone |
| 60 | Stauchungszone |
| 61 | Doppelbiegebalken |
| 62 | Sensorelement |

**Patentansprüche**

1. Dehnungsmessstreifen (10) umfassend ein flexibles Substrat (12) sowie eine auf dem flexiblen Substrat (12) angeordnete Widerstandsschicht (14), wobei in der Widerstandsschicht (14) mindestens ein Messwiderstand (18) mit einer Leiterbahn (15), mit mindestens einem geraden Leiterbahnabschnitt (40) und/oder mindestens einem gekrümmten Leiterbahnabschnitt (42) durch Strukturierung der Widerstandsschicht (14) ausgebildet ist, wobei der spezifische Widerstand der Widerstandsschicht (14) abhängig von einer Dehnung der Widerstandsschicht (14) ist und wobei die Widerstandsschicht (14) eine Änderung des spezifischen Widerstands sowohl bei Dehnung in einer Längsrichtung (34) als auch bei Dehnung in einer dazu senkrechten Querrichtung (36) aufweist,
**dadurch gekennzeichnet, dass** der Dehnungsmessstreifen (10) mindestens einen Freischnitt (28) in Form eines Bereichs mit flächigem Materialabtrag oder mindestens eines Einschnitts (30) in das flexible Substrat (12) aufweist, wobei die Tiefe (d) des Freischnitts (28) von der mit der Widerstandsschicht (14) bedeckten Oberseite des flexiblen Substrats (12) aus gemessen mindestens 1/100 der Breite (B) des mindestens einen Leiterbahnabschnitts (40, 42) beträgt und
wobei der mindestens eine Freischnitt (28) innerhalb des mindestens einen Leiterbahnabschnitts (40,42) angeordnet ist oder wenn der Freischnitt (28) außerhalb des Leiterbahnabschnitts (40, 42) angeordnet ist, in einem Abstand von dem mindestens einen Leiterbahnabschnitt (40,42) entfernt angeordnet ist, welcher geringer ist als die zehnfache Dicke (D) des flexiblen Substrats (12).

2. Dehnungsmessstreifen (10) nach Anspruch 1, **dadurch gekennzeichnet, dass** der mindestens eine Einschnitt (30) in Form einer parallel zu dem mindestens einen Leiterbahnabschnitt (40,42) verlaufenden Linie ausgestaltet ist.

3. Dehnungsmessstreifen (10) nach Anspruch 2, **dadurch gekennzeichnet, dass** der mindestens eine Einschnitt (30) in Form einer unterbrochenen Linie ausgeführt ist.

4. Dehnungsmessstreifen (10) nach Anspruch 1, **dadurch gekennzeichnet, dass** die Tiefe des mindestens einen Freischnitts (30) im Bereich von 1/100 der Breite des mindestens einen Leiterbahnabschnitts (40,42) bis zur Dicke des flexiblen Substrats beträgt.

5. Dehnungsmessstreifen (10) nach einem der Ansprüche 1 bis 4 **dadurch gekennzeichnet, dass** die Breite (B) des mindestens einen Leiterbahnabschnitts (40,42) im Bereich von 1/1000 der Dicke (D) des flexiblen Substrats (12) bis zu einer Breite, die dem Fünffachen der Dicke (D) des flexiblen Substrats (12) entspricht, beträgt.

6. Dehnungsmessstreifen (10) nach einem der Ansprüche 1 bis 5, **dadurch gekennzeichnet, dass** das Material der Widerstandsschicht (14) ausgewählt ist aus der Gruppe umfassend graphitartiger Kohlenstoff mit Me-Clustern, Me:a-C:H, Nanocermets, diamantähnlichem Kohlenstoff (DLC), Me-DLC, Me-Cluster eingebettet in einer Schicht umfassend eine Kombination mindestens zweier verschiedener Kohlenstoffmodifikationen, Me-oxinitrid, Me-nitrid und Me-Nanopartikel-Dünnschichten, wobei Me ein Metall oder eine Mischung mehrerer Metalle ist.

7. Dehnungsmessstreifen (10) nach einem der Ansprüche 1 bis 6, **dadurch gekennzeichnet, dass** das Material des flexiblen Substrats (12) ausgewählt ist aus der Gruppe umfassend Polyimid, Polyamid, Polyetheretherketon (PEEK), Silikonkautschuk, Keramikfolien, Glasfolien und Kombinationen mehrerer dieser Materialien.

8. Dehnungsmessstreifen (10) nach einem der Ansprüche 1 bis 7, **dadurch gekennzeichnet, dass** der mindestens eine Freischnitt (28) mindestens einen parallelen und in Längsrichtung verlaufenden Einschnitt (30) umfasst, welcher auf einer Seite des Leiterbahnabschnitts (40,42) verläuft oder mindestens zwei Einschnitte umfasst, welche beidseitig des mindestens einen Leiterbahnabschnitts (40,42) verlaufen oder der mindestens eine Freischnitt (28) mindestens einen in Längsrichtung verlaufenden Einschnitt (30) umfasst, welcher innerhalb des mindestens einen Leiterbahnabschnitts (40,42) angeordnet ist, wobei die Tiefe (d) des mindestens einen Freischnitts (28) derart gewählt ist, dass bei einer Dehnung des Dehnungsmessstreifens (10) in Längsrichtung (34) der den Messwiderstand (18) umfassende Bereich des flexiblen Substrats (12) an seiner durch das Widerstandsmaterial (14) bedeckten Oberfläche eine Formänderung erfährt, die vollständig aus der Längsdehnung und aus der Poisson-Zahl-abhängigen Einschnürung des flexiblen Substrats (12) resultiert.

9. Sensorelement (38, 38', 62) umfassend ein elastisches Element (32) und mindestens einen mit dem elastischen Element (32) verbundenen Dehnungsmessstreifen (10) gemäß einem der Ansprüche 1 bis 8.

10. Sensorelement (38, 38', 62) gemäß Anspruch 9, **dadurch gekennzeichnet, dass** die Tiefe (d) des mindestens einen Freischnitts (28) und/oder die Breite (B) des mindestens einen Leiterbahnabschnitts (40,42) so gewählt sind, dass eine Relaxation des mindestens einen Dehnungsmessstreifens (10) bei einer vorgegebenen Krafteinwirkung auf das elastische Element (32) nach einer vorgegebenen Wartezeit einem elastischen Nachwirken des elastischen Elements (32) betragsmäßig entspricht und dem elastischen Nachwirken des elastischen Elements (32) entgegengesetzt ist.

11. Sensorelement (38, 38', 62) gemäß Anspruch 9, wobei der Wärmeausdehnungskoeffizient des elastischen Elements (32) von dem Wärmeausdehnungskoeffizienten des flexiblen Substrats (12) des Dehnungsmessstreifens (10) verschieden ist, **dadurch gekennzeichnet, dass** die Tiefe (d) des mindestens einen Freischnitts (28) und/oder die Breite (B) des mindestens einen Leiterbahnabschnitt (40,42) so gewählt sind, dass ein Temperaturkoeffizient des Sensorelements (38, 38', 62) minimiert wird.

**Claims**

1. Strain gauge (10) comprising a flexible substrate (12) and a resistance layer (14) which is arranged on the flexible substrate (12), wherein

   at least one measuring resistor (18) with a conductor track (15), which comprises at least one straight conductor track section (40) and/or at least one curved conductor track section (42), is formed in the resistance layer (14) by structuring the resistance layer (14), wherein the resistivity of the resistance layer (14) is dependent on an elongation of the resistance layer (14) and wherein the resistance layer (14) has a change in the resistivity both when there is elongation in a longitudinal direction (34) and when there is elongation in a transverse direction (36) perpendicular thereto,
   **characterized in that** the strain gauge (10) has at least one cutout (28) in the form of a region with surface-area material removal or at least one incision (30) into the flexible substrate (12), wherein the depth (d) of the cutout (28), measured from the upper side of the flexible substrate (12) covered by the resistance layer (14), is at least 1/100 of the width (B) of the at least one conductor track section (40, 42) and wherein the at least one cutout (28) is arranged within the at least one conductor track section (40, 42) or, if the cutout (28) is arranged outside the conductor track section (40, 42), is arranged at a distance from the at least one conductor track section (40, 42) that is smaller than ten times the thickness (D) of the flexible substrate (12).

2. Strain gauge (10) according to Claim 1, **characterized in that** the at least one incision (30) is designed in the form of a line running parallel to the at least one conductor track section (40, 42).

**3.** Strain gauge (10) according to Claim 2, **characterized in that** the at least one incision (30) is made in the form of an interrupted line.

**4.** Strain gauge (10) according to Claim 1, **characterized in that** the depth of the at least one cutout (30) is in the range from 1/100 of the width of the at least one conductor track section (40, 42) to the thickness of the flexible substrate.

**5.** Strain gauge (10) according to one of Claims 1 to 4, **characterized in that** the width (B) of the at least one conductor track section (40, 42) is in the range from 1/1000 of the thickness (D) of the flexible substrate (12) to a width that corresponds to five times the thickness (D) of the flexible substrate (12) .

**6.** Strain gauge (10) according to one of Claims 1 to 5, **characterized in that** the material of the resistance layer (14) is selected from the group comprising graphite-like carbon with Me clusters, Me:a-C:H, nanocermet, diamond-like carbon (DLC), Me-DLC, Me clusters embedded in a layer comprising a combination of at least two different carbon modifications, Meoxynitride, Me-nitride and Me-nanoparticle thin layers, where Me is a metal or a mixture of a number of metals.

**7.** Strain gauge (10) according to one of Claims 1 to 6, **characterized in that** the material of the flexible substrate (12) is selected from the group comprising polyimide, polyamide, polyether ether ketone (PEEK), silicone rubber, ceramic films, glass films and combinations of a number of these materials.

**8.** Strain gauge (10) according to one of Claims 1 to 7, **characterized in that** the at least one cutout (28) comprises at least one incision (30), which is parallel and runs in the longitudinal direction and runs on one side of the conductor track section (40, 42), or comprises at least two incisions, which run on both sides of the at least one conductor track section (40, 42), or the at least one cutout (28) comprises at least one incision (30), which runs in the longitudinal direction and is arranged within the at least one conductor track section (40, 42), wherein the depth (d) of the at least one cutout (28) is chosen in such a way that, when there is an elongation of the strain gauge (10) in the longitudinal direction (34), the region of the flexible substrate (12) comprising the measuring resistor (18) undergoes a change in shape at its surface covered by the resistance material (14) that is entirely a result of the longitudinal elongation and the Poisson-number-dependent constriction of the flexible substrate (12).

**9.** Sensor element (38, 38', 62) comprising an elastic element (32) and at least one strain gauge (10) according to one of Claims 1 to 8 connected to the elastic element (32).

**10.** Sensor element (38, 38', 62) according to Claim 9, **characterized in that** the depth (d) of the at least one cutout (28) and/or the width (B) of the at least one conductor track section (40, 42) are chosen such that, after a specified waiting time, a relaxation of the at least one strain gauge (10) when there is a specified force effect on the elastic element (32) corresponds in terms of amount to an elastic after-effect of the elastic element (32) and is opposed to the elastic after-effect of the elastic element (32).

**11.** Sensor element (38, 38', 62) according to Claim 9, wherein the coefficient of thermal expansion of the elastic element (32) is different from the coefficient of thermal expansion of the flexible substrate (12) of the strain gauge (10), **characterized in that** the depth (d) of the at least one cutout (28) and/or the width (B) of the at least one conductor track section (40, 42) are chosen such that a temperature coefficient of the sensor element (38, 38', 62) is minimized.

**Revendications**

**1.** Jauge extensométrique (10) comprenant un substrat flexible (12) ainsi qu'une couche résistive (14) disposée sur le substrat flexible (12),

au moins une résistance de mesure (18) pourvue d'une piste conductrice (15), comprenant au moins une portion de piste conductrice droite (40) et/ou au moins une portion de piste conductrice courbe (42), étant formée dans la couche résistive (14) par structuration de la couche résistive (14), la résistance spécifique de la couche résistive (14) étant dépendante d'une extension de la couche résistive (14) et la couche résistive (14) présentant une modification de la résistance spécifique à la fois lors de l'extension dans une direction longitudinale (34) que lors de l'extension dans une direction transversale (36) perpendiculaire à celle-ci, **caractérisée en ce que** la jauge extensométrique (10) possède au moins une coupe libre (28) sous la forme d'une zone avec un enlèvement de matière en surface ou au moins une entaille (30) dans le substrat flexible (12), la profondeur (d) de la coupe libre (28), mesurée à partie du côté supérieur du substrat flexible (12) recouvert par la couche résistive (14), étant d'au moins $1/100^e$ de la largeur (B) de l'au moins une portion de piste conductrice (40, 42) et l'au moins une coupe libre (28) étant disposée à l'intérieur de l'au moins une portion de piste conductrice (40, 42) ou, lorsque la coupe libre (28) est disposée en dehors de la portion de piste conductrice (40, 42), étant disposée éloignée d'un écart donné de l'au moins une portion de piste conductrice (40, 42), lequel est inférieur à dix fois l'épaisseur (D) du substrat flexible (12).

2. Jauge extensométrique (10) selon la revendication 1, **caractérisée en ce que** l'au moins une entaille (30) est configurée sous la forme d'une ligne qui suit un tracé parallèle à l'au moins une portion de piste conductrice (40, 42) .

3. Jauge extensométrique (10) selon la revendication 2, **caractérisée en ce que** l'au moins une entaille (30) est réalisée sous la forme d'une ligne discontinue.

4. Jauge extensométrique (10) selon la revendication 1, **caractérisée en ce que** la profondeur de l'au moins une entaille (30) se situe dans la plage de 1/100$^e$ de la largeur l'au moins une portion de piste conductrice (40, 42) à l'épaisseur du substrat flexible.

5. Jauge extensométrique (10) selon l'une des revendications 1 à 4, **caractérisée en ce que** la largeur (B) de l'au moins une portion de piste conductrice (40, 42) se situe dans la plage de 1/1000$^e$ de l'épaisseur (D) du substrat flexible (12) à une largeur qui correspond au quintuple de l'épaisseur (D) du substrat flexible (12)

6. Jauge extensométrique (10) selon l'une des revendications 1 à 5, **caractérisée en ce que** le matériau de la couche résistive (14) est choisi dans le groupe comprenant du carbone de type graphite avec des amas de Me, Me:a-C:H, des nanocermets, du carbone de type diamant (DLC), Me-DLC, des amas de Me incorporés dans une couche comprenant une combinaison d'au moins deux modifications différentes du carbone, oxinitrure de Me, nitrure de Me et des couches minces de nanoparticules de Me, Me étant un métal ou un mélange de plusieurs métaux.

7. Jauge extensométrique (10) selon l'une des revendications 1 à 6, **caractérisée en ce que** le matériau du substrat flexible (12) est choisi dans le groupe comprenant le polyimide, le polyamide, le polyétheréthercétone (PEEK), le caoutchouc de silicone, des feuilles de céramique, des feuilles de verre et des combinaisons de plusieurs de ces matériaux.

8. Jauge extensométrique (10) selon l'une des revendications 1 à 7, **caractérisée en ce que** l'au moins une coupe libre (28) comporte au moins une entaille (30) qui suit un tracé parallèle et dans la direction longitudinale, laquelle suit un tracé sur un côté de la portion de piste conductrice (40, 42), ou comporte au moins deux entailles, lesquelles suivent un tracé des deux côtés de l'au moins une portion de piste conductrice (40, 42), l'au moins une coupe libre (28) comporte au moins une entaille (30) qui suit un tracé dans la direction longitudinale, laquelle est disposée à l'intérieur de l'au moins une portion de piste conductrice (40, 42), la profondeur (d) de l'au moins une coupe libre (28) étant choisie de telle sorte que lors d'une extension de la jauge extensométrique (10) dans la direction longitudinale (34), la zone du substrat flexible (12) qui comporte la résistance de mesure (18) subit, au niveau de sa surface recouverte par le matériau résistif (14), un changement de forme qui résulte entièrement de l'extension en longueur et du rétrécissement dépendant du coefficient de Poisson du substrat flexible (12).

9. Élément capteur (38, 38', 62) comprenant un élément élastique (32) et au moins une jauge extensométrique (10) selon l'une des revendications 1 à 8 reliée à l'élément élastique (32).

10. Élément capteur (38, 38', 62) selon la revendication 9, **caractérisé en ce que** la profondeur (d) de l'au moins une coupe libre (28) et/ou la largeur (B) de l'au moins une portion de piste conductrice (40, 42) sont choisies de telle sorte qu'un relâchement de l'au moins une jauge extensométrique (10) en présence d'une force prédéfinie exercée sur l'élément élastique (32) après un temps d'attente prédéfini correspond, par sa valeur absolue, à un effet secondaire élastique de l'élément élastique (32) et est opposé à l'effet secondaire élastique de l'élément élastique (32).

11. Élément capteur (38, 38', 62) selon la revendication 9, le coefficient de dilatation thermique de l'élément élastique (32) étant différent du coefficient de dilatation thermique du substrat flexible (12) de la jauge extensométrique (10), **caractérisé en ce que** la profondeur (d) de l'au moins une coupe libre (28) et/ou la largeur (B) de l'au moins une portion de piste conductrice (40, 42) sont choisies de telle sorte qu'un coefficient de température de l'élément capteur (38, 38', 62) est réduit au minimum.

Fig. 1

Fig. 2

Fig. 3

Fig. 4

Fig. 5 a

Fig. 5 b

Fig. 6

Fig. 7

Fig. 8

Fig. 9

**EP 3 732 452 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009129930 A1

- DE 102015006057 A1